# EUROPEAN PATENT SPECIFICATION

(11) **EP 3 299 514 B1**
(45) Date of publication and mention of the grant of the patent: **06.11.2024**
(21) Application number: 17192086.1
(22) Date of filing: 20.09.2017
(51) Int. Cl.: D06M 15/11, D06M 15/333, D06N 3/00, D06N 7/00, C08L 3/02, C09D 103/02, D04H 1/4218, D04H 1/4209, D04H 1/587, D04H 1/64, D04H 3/004, D04H 3/005, D04H 3/16

(54) **BINDER-CONSOLIDATED TEXTILE FABRIC, METHOD FOR ITS MANUFACTURE AND ITS USE**
BINDERVERFESTIGTES TEXTILGEWEBE, VERFAHREN ZU DESSEN HERSTELLUNG UND DESSEN VERWENDUNG
TISSU TEXTILE CONSOLIDÉ PAR UN LIANT, SON PROCÉDÉ DE PRODUCTION ET SON UTILISATION

(30) Priority: 24.09.2016 DE 102016011586
(43) Date of publication of application: 28.03.2018
(73) Proprietor: Johns Manville Europe GmbH, 86399 Bobingen (DE)
(72) Inventor: Groh, Werner, 86830 Schwabmünchen (DE); Frick, Agnes, 89312 Günzburg (DE)
(74) Representative: Dörr, Klaus

(56) References cited:
- EP-A1- 1 885 785
- EP-A1- 2 679 624
- EP-A1- 2 714 794
- EP-A1- 2 924 071
- EP-A1- 2 987 827
- EP-A2- 0 354 023
- WO-A1-2015/084372
- US-A- 5 405 653
- DATABASE WPI Week 201420, Derwent World Patents Index; AN 2014-C68689
- DATABASE WPI Week 201671, Derwent World Patents Index; AN 2016-55595T

## Description

The invention relates to novel binder systems for consolidating textile fabric, textile fabrics consolidated thereby, their manufacture, as well as products containing the binder system or a textile surface equipped therewith. In this disclosure the terms "binder system" and "binder" will be used interchangeably.

Textile fabrics, in particular those which are used as an insert for the manufacture of coated materials, must meet a wide range of requirements. Examples of the use of such inserts are, among other things, textile backings for fitted carpets, textile reinforcements in PVC flooring or roofing sheets.

When used in the manufacture of roofing sheets, the inserts or reinforcing inserts used must have sufficient mechanical stability, such as good perforation strength and good tensile strength, which are brought about, for example, upon further processing, such as bituminization or laying. In addition, a high resistance to thermal stress, for example in the case of bituminizing or against radiant heat, and resistance to flying sparks is required.

When used in the manufacture of coated flooring, for example PVC flooring, additional demands are placed on such inserts. In this field of application, in addition to the mechanical/thermal requirements, the inserts must also avoid the formation of gaseous substances, since otherwise, blistering would be observed during manufacture, for example by the formation of water vapor. Blistering of this kind is highly problematic and leads to losses in yield or to poorer quality.

Additional requirements are placed on such inserts for use in the manufacture of surfaces in the interior and exterior of buildings. In this field of application, in addition to the mechanical/thermal requirements, the inserts must also have decorative properties which remain unchanged or almost unchanged over a long period of time.

In addition to the aforementioned technical requirements, environmental compatibility or new legal regulations are also responsible for the replacement of existing, occasionally properly functioning systems with new, compliant systems. Examples in this regard include new industrial standards, such as DIN EN 14041, or legislative changes, such as REACH.

The binding systems used hitherto for consolidating textile surfaces are based on thermoplastic and/or thermoset binder systems. Examples which may be mentioned here are aminoplasts and binders based on acrylates.

EP-A-2 192 153 discloses binder systems based on crosslinked polycarboxylates and starch. EP-A-2 987 827 describes binder systems based on polyacrylates, wherein these are not crosslinked by means of a low molecular weight crosslinker, and starch. Further binder systems based on polyvinyl acetate and starch are known from EP-A-2 607 533. The binder systems described are already very well suited for the manufacture and consolidation of textile fabrics and have good heat resistance. Other binder systems which include starch(es) are known e.g. from EP-A-2 924 071, EP-A-2 679 624, EP-A-0 354 023, EP-A-1 885 785, WO 2015/084372, EP-A-2 714 794 and CN 105908504 A. In addition, using starch as ingredient for textile sizing is known, e.g. from U.S. Patent 5,405,653.

For some applications, however, the wet strength and color stability should be improved. Furthermore, a reduction in binder costs is an important goal of binder development. In addition, the ever-increasing demand for binder systems which are predominantly based on renewable raw materials has to be met.

There is thus a considerable need for the provision of novel binder systems for consolidating textile surfaces which are intended to be used as inserts, which on the one hand satisfy the technical requirements and the legal provisions, and on the other hand are economically accessible. In addition, novel binder systems should be able to be used in existing production systems and applied by means of known methods and equipment. The novel binder systems should predominantly be based on renewable raw materials.

The object of the present invention is therefore to provide novel binder systems for consolidating textile surfaces, which on the one hand meet the technical requirements and the legal provisions, while on the other hand are economically accessible and additionally have improved color stability over a longer period of time. A further object is to be able to process the binder systems using known and established methods, so that investments can be kept low. A further object is to provide novel binder systems which are predominantly based on renewable raw materials, i.e., a minimum of 50% by weight, preferably a minimum of 70% by weight of the binder system (proportions by weight based on the dry mass of the binder system) should consist of naturally occurring and renewable raw materials.

The subject matter of the present invention is thus a textile fabric as claimed in claims 1 to 11.

In a further aspect of the present invention, the binder used according to the invention comprises:
a) 1 to ≤ 30% by weight, preferably ≤ 20% by weight, in particular 1 to 20% by weight of polyvinyl alcohol polymers, and
b) ≥ 70% by weight, having a minimum of 50% by weight of natural starch(es), preferably ≥ 80% by weight, in particular 99 to 80% by weight of starch, preferably a natural starch or a mixture of a natural starch with other natural starches or preferably a natural starch or a mixture of one or more natural starches with other starches, and
c) 0 to 10% by weight of crosslinker,
d) 0 to 10% by weight of fillers,
e) 0 to 10% by weight of additives,
wherein the specifications regarding the proportions by weight are based on the dry mass of the binder, i.e., without water, and the sum of the constituents a) to e) is 100% by weight, and its use for consolidating textile fabrics.

In a further aspect of the present invention, a method for consolidating textile fabrics by means of application of a binder comprises:
a) 1 to ≤ 30% by weight, preferably ≤ 20% by weight, in particular 1 to 20% by weight of polyvinyl alcohol polymers, and
b) ≥ 70% by weight, preferably ≥ 80% by weight, in particular 99 to 80% by weight of starch, having a minimum of 50% by weight of natural starch(es), preferably a natural starch or a mixture of a natural starch with other natural starches or preferably a natural starch or a mixture of one or more natural starches with other starches, and
c) 0 to 10% by weight of crosslinker,
d) 0 to 10% by weight of fillers,
e) 0 to 10% by weight of additives,
wherein the specifications regarding the proportions by weight are based on the dry mass of the binder, i.e., without water, and the sum of the constituents a) to e) is 100% by weight, onto a textile fabric and subsequent drying and curing of the binder.

In a preferred embodiment of the present invention, the proportion of the component a) (polyvinyl alcohol polymers) is ≤ 20% by weight, in particular 1 to 20% by weight.

In a preferred embodiment of the present invention, the proportion of the component b) (starch) is ≥ 80% by weight, in particular 99 to 80% by weight.

In a further preferred embodiment, the sum of the components a) and b) is at least 80% by weight, in particular at least 85% by weight, more preferably at least 90% by weight.

In a further embodiment of the present invention, the proportion of the component c) (crosslinker) is at least 0.1% by weight.

After drying, the quantity of the binder according to the invention applied to the textile fabric is preferably between 5 and 50% by weight of dry binder, in particular 10 and 30% by weight, particularly preferably 10 and 25% by weight of dry binder, based on the total weight of the raw textile fabric. For applications in the field of filtration products, the quantity applied after drying is preferably between 5 and 25% by weight.

Insofar as the binder system used according to the invention is to be used as an aqueous dispersion or solution, the viscosity is preferably 50 to 20000 mPa*s, in particular 100 to 8000 mPa*s, more preferably 900 to 4000 mPa*s (determined according to DIN EN ISO 2555 and at 23°C).

The binder system used according to the invention can be present as true dispersions, colloidally disperse or molecularly disperse dispersions, but generally as so-called partial dispersions, i.e., aqueous systems, which are partially molecularly disperse and partly colloidally disperse.

The textile fabric consolidated by means of the binder system according to the invention has a significantly higher proportion of natural starch, i.e., unmodified renewable raw materials, compared with consolidated textile fabrics based on modified starches, without adversely affecting the mechanical properties of the consolidated textile fabric. The textile fabrics consolidated by means of the binder system according to the invention have good wet strength and excellent mechanical strength, but are cheaper to produce. The same applies to dimensional stability upon heating, which is also maintained despite exchanging significant proportions of component a) for components b). Despite the high proportion of component b), the brittleness of textile fabric consolidated by means of the binder system according to the invention is quite low.

Furthermore, the binder system according to the invention is slightly hygroscopic, so that no restrictions can be envisaged on using the consolidated textile fabrics as reinforcing inserts in the manufacture of PVC flooring, for example by blistering.

The aging behavior of the consolidated textile fabrics, which is almost constant, is also surprising.

In addition, it has been found that the binder system according to the invention allows for very good miscibility. The combination according to the invention of polymers based on polyvinyl alcohol, and starch, but in particular of natural starch(es) or mixtures of starches which predominantly, i.e., a minimum of 50% by weight, consist of of natural starch(es), results in binder systems which have a high homogeneity. In particular, the aggregation of binder components which frequently occurs in binder mixtures is avoided. This high homogeneity results in a good distribution of the binder system on and in the textile fabric during the application of the binder system, which in turn leads to very homogeneous properties of the consolidated textile fabric.

Compared with a textile fabric which exclusively has starch as the binder component, the textile fabric consolidated according to the invention is improved or at least equivalent in terms of its hygroscopic behavior, strength, in particular wet and hot strength, brittleness, aging behavior and flexibility.

Considerable cost savings arise because of the predominant use of starch, in particular of natural starch. In addition, a completely formaldehyde-free binder system is obtained which, surprisingly, does not cause a deterioration in the product properties, in particular with respect to the mechanical properties of the textile fabric, such as, strength, for example.

For the person skilled in the art, it was surprising here that the binder system according to the invention can be applied to the textile fabric in a sufficiently high solids concentration. Hitherto, a person skilled in the art would have known that binder systems which comprise natural, i.e., native starch, cannot reach the required binder content of ≥ 15% by weight [binder content after drying, based on the total weight of the raw textile fabric] in a single application.

Accordingly, the binder system according to the invention preferably has a solids concentration of a minimum of 5% by weight, wherein the specifications regarding the proportions by weight are based on the dry mass of the binder system, i.e., without water, and the sum of constituents a) to e) is 100% by weight.

### BINDER COMPONENT A) (POLYMERS)

The polyvinyl alcohol polymers used as component a) according to the invention are commercially available polyvinyl alcohols which have a degree of saponification of 80-99%. Fully saponified polyvinyl alcohols may also be used.

The polyvinyl alcohol polymers used according to the invention can have up to 5 mol% of other co-monomer units, for example monomer units based on ethylene so that, in addition to the polyvinyl alcohol homopolymers, co- or terpolymers are also included. The polymers based on polyvinyl alcohols used according to the invention are preferably homopolymers.

The polyvinyl alcohol polymers used according to the invention are commercially available, for example, from Kuraray under the name POVAL^{®} or Mowiol^{®}.

The polyvinyl alcohol polymers used according to the invention can be mixed with the natural starch as an aqueous dispersion or solution, or even in powder form. The components can be pre-mixed individually or together in water and heated to a temperature below the boiling point of water, e.g., 70-95°C, and adjusted with regard to the viscosity. The binder system is then adjusted to the application temperature, i.e., heated or cooled as required.

Insofar as component a) of the binder system according to the invention is to be used as an aqueous polymer dispersion, conventional and known emulsifiers or protective colloids can be added for stabilization. These are known to a person skilled in the art (cf. Houben-Weyl, Methoden der org. Chemie [Methods in Organic Chemistry], Vol. XIV/1, 1961, Stuttgart). Examples of emulsifiers are polyglycol ethers, fatty alcohol polyglycol ethers, phosphoric acid esters and their salts, sulfonated paraffin hydrocarbons, higher alkyl sulfates (e.g., lauryl sulfate), alkali metal salts of fatty acids such as sodium stearate or sodium oleate, sulfuric acid half-esters of ethoxylated fatty acid alcohols, salts of esters and half-esters of alkylpolyoxyethylene sulfosuccinates, salts of sulfonated alkylaromatics such as, for example, sodium dodecylbenzenesulfonate, ethoxylated C4-C12 alkylphenols and their sulfonation products, and esters of sulfosuccinic acid. Examples of protective colloids are alkylhydroxyalkylcelluloses, partially or fully hydrolyzed polyvinyl alcohols and copolymers thereof, acrylic acid, homo- and copolymers and partially neutralized salts thereof, acrylamide copolymers, polyacrylate copolymers and salts thereof, carboxyalkylcellulose, such as carboxymethylcellulose and salts thereof.

In addition, component a) can be present as true dispersions, colloidally disperse or molecularly disperse dispersions, but in general as so-called partial dispersions, i.e., aqueous systems which are partially molecularly disperse and partly colloidally disperse.

Insofar as component a) of the binder system according to the invention is to be used as an aqueous polymer dispersion or polymer solution, the solids content is preferably between 5 - 30% by weight, in particular between 5 and 20% by weight, particularly preferably 7 to 15% by weight (determined according to DIN EN ISO 3251).

Insofar as the component a) of the binder system according to the invention is to be used as an aqueous polymer dispersion, the viscosity is preferably from 50 to 20000 mPa*s, in particular from 100 to 8000 mPa*s, more preferably from 900 to 4000 mPa*s (determined according to DIN EN ISO 2555 and at 23°C).

Insofar as the component a) of the binder system according to the invention is to be used as an aqueous polymer dispersion, the pH (measured as a 10% by weight solution in water) is between 4 and 8, preferably between 4.5 and 7.0 (determined according to DIN ISO 976).

In a preferred embodiment of the invention, the binder system according to the invention essentially comprises no additional polyacrylate dispersion based on acrylic acid and/or modified acrylic acid, especially methacrylic acid, monomers, as well as maleic acid/maleic anhydride and/or styrene maleic anhydride (SMA). In this context, "essentially" means that up to 10% by weight of the polyvinyl alcohol is replaced by polyacrylates, wherein the total quantity of components a) remains unchanged. The binder system according to the invention particularly preferably comprises essentially no additional polyacrylate dispersion.

In a preferred embodiment of the invention, the binder system according to the invention essentially comprises no additional polyvinyl acetate dispersions. In this context, "essentially" means that up to 10% by weight of the polyvinyl alcohol is replaced by polyvinyl acetate, wherein the total quantity of components a) remains unchanged. The binder system according to the invention particularly preferably comprises essentially no additional polyvinylacetate dispersion.

### BINDER COMPONENT B) (STARCH)

The starches used according to the invention are not subject to any restrictions, but they must be compatible with the component a) and, if appropriate, with components c), d) and e).

Suitable starches according to the invention are natural, so-called native starches, as well as modified starches. Starches which have sufficient cold solubility and/or hot solubility are generally advantageous.

The starch used according to the invention is preferably (a) a natural starch or a mixture of a natural starch with other natural starches, or (b) a natural starch or a mixture of one or more natural starches with other starches, wherein the mixture has a minimum of 50% by weight of natural starch(es).

A group of natural starches which can be used in the context of the invention comprises the starches obtained from vegetable raw materials. These include, among others, starches from tubers such as potatoes, manioc, maranta, batata, from grain such as wheat, maize, rye, rice, barley, millet, oats, sorghum, from fruits such as chestnuts, acorns, beans, peas, and other legumes, bananas, as well as from plant pulp, e.g., from the sago palm.

The starches which can be used in the context of the invention essentially consist of amylose and amylopectin, in varying proportions.

The molecular weights of the starches for use in accordance with the invention can vary over a wide range. Starches essentially consisting of a mixture of amylose and amylopectin preferably have molecular weights M_{w} in the range between 5×10² and 7×10¹⁰, particularly preferably between 5×10⁴ and 1×10⁸.

The natural starches used according to the invention consist predominantly of natural starches or mixtures of natural starches.

For the purposes of the present invention, "other" starches are understood to be non-natural starches, i.e., modified starches such as cationic or anionic starches or starch derivatives (so-called chemically modified starches).

In addition to starches of native plant origin, modified starches which are chemically modified, obtained by fermentation, of recombinant origin or are produced by biotransformation (biocatalysis) are also possible.

A synonym for the term "biotransformation" that is also used is the term "biocatalysis".

"Chemically modified starches" should be understood to mean those starches the properties of which have been chemically modified in comparison with the natural properties. This is achieved essentially by polymer-analogous reactions in which starch is treated with mono-, bi- or polyfunctional reagents or oxidizing agents. The hydroxyl groups of the starch are preferably converted by etherification, esterification or selective oxidation, or the modification is based on a free-radical-initiated graft copolymerization of copolymerizable unsaturated monomers onto the starch backbone.

Specific chemically modified starches include, among others, starch esters such as xanthogenates, acetates, phosphates, sulfates, nitrates, starch ethers such as, e.g., nonionic, anionic or cationic starch ethers, oxidized starches such as dialdehyde starch, carboxy starch, persulfate-degraded starches and like substances.

"Fermentative starches" are, in the language of the invention, starches which are obtained by fermentative processes using naturally occurring organisms such as fungi, algae or bacteria, or can be obtained by activating and using fermentative processes. Examples of starches from fermentative processes comprise, among others, gum arabic and related polysaccharides (gellan gum, gum ghatti, gum karaya, gum tragacanth), xanthan, emulsan, rhamsan, wellan, schizophyllan, polygalacturonate, laminarine, amylose, amylopectin and pectins.

By "starches of recombinant origin" or "recombinant starches", the invention means individual starches which are obtained by fermentative processes using organisms not occurring in nature, but natural organisms modified with the help of genetic methods, such as fungi, algae or bacteria, or which can be obtained by activating and using fementative processes. Examples of starches from fermentative, genetically modified processes are, among others, amylose, amylopectin and polyglucans.

In the context of the invention, "starches manufactured by biotransformation" means that starches, amylose, amylopectin or polyglucans are prepared by catalytic reaction of monomeric basic building blocks, generally oligomeric saccharides, in particular mono- and disaccharides, in which a biocatalyst (also: enzyme) is used under specific conditions. Examples of starches from biocatalytic processes are, among others, polyglucan and modified polyglucans, polyfructan and modified polyfructans.

Furthermore, derivatives of the individual starches mentioned are also encompassed by the invention. In this context, the terms "derivatives of starches" or "starch derivatives" mean generally modified starches, i.e., those starches in which the natural amylose/amylopectin ratio has been modified in order to alter their properties, a pre-gelatinization has been carried out, partial hydrolytic degradation has been carried out or chemical derivatization has been carried out.

Specific derivatives of starches include, among others, oxidized starches, e.g., dialdehyde starch or other oxidation products containing carboxyl functions, or native ionic starches (e.g., with phosphate groups) or further ionically modified starches, this meaning that both anionic and cationic modifications are included.

The destructurized starches which can be used within the context of the invention include those which have been homogenized, for example, by means of glycerin, so that no more crystalline reflections occur in the X-ray diffraction diagram and starch granules or double-breaking regions are no longer visible at a magnification of 1000 under the polarization microscope. In this connection, reference is made to DE-A1-3931363, the disclosure of which also forms part of this description of the destructured starches.

In a preferred embodiment, the natural starches used according to the invention as well as the entire binder system do not contain any modified starches, for example starches which are chemically modified, are fermentatively obtained, are of recombinant origin or have been manufactured by biotransformation (biocatalysis).

The starches used according to the invention are commercially available, for example from Avebe, Cargill, National Starch, Penford Products Co Purac or Südstärke.

Starches which have sufficient cold solubility and/or sufficient hot solubility are particularly advantageous. A sufficient solubility is provided when the viscosity of the binder system according to the invention allows for appropriate processability.

### BINDER COMPONENT C) ( CROSSLINKER)

The binder used according to the invention can also contain up to 10% by weight of crosslinker.

The crosslinkers used as component c) according to the invention are synthetic resins based on urea-formaldehyde (UF), melamine-formaldehyde (MF) or mixtures (MUF).

In addition, the following substances are also suitable as component c): polyisocyanate compounds, for example tolylene diisocyanate, hydrogenated tolylene diisocyanate, adducts of trimethylolpropane and tolylene diisocyanate, triphenylmethane triisocyanate, methylenebis (4-phenylmethane) triisocyanate, isophorone diisocyanate, their reaction products with ketoxime or phenol; polyaldehydes, for example glyoxal, succindialdehyde, malonaldehyde, maleic acid dialdehyde, phthalic acid dialdehyde, glutaric acid aldehyde, adipaldehyde; polyepoxy compounds, for example ethylene glycol diglycidyl ether, polyethylene glycol diglycidyl ether, glycerol diglycidyl ether, glycerol triglycidyl ether, 1,6-hexanediol diglycidyl ether, trimethylolpropane triglycidyl ether, diglycidylaniline, diglycidylamine;
polyamine compounds, for example urea, melamine, methylolurea, methylolmelamine, hexamethylenediamine, triethanolamine;
compounds which can form a radical, for example, hydrogen peroxide, potassium peroxodisulfate, ammonium persulfate, benzoyl peroxide, succinic acid peroxide, t-butyl peroxymaleate, benzoin alkyl ethers, e.g., t-butyl hydroperoxide benzoin methyl ether, benzoin ethyl ether and benzoin isopropyl ether, organic sulfur compounds such as dibutylsulfide, benzylsulfide and decylphenylsulfide, a diazonium salt and a triazonium salt, their double salts with zinc chloride or its condensation product, azobisisobutyronitrile, 2,2'-azobis (2-amidinopropane) dihydrochloride, dyes such as, e.g., methylene blue or a combination of the p-toluenesulfonate ion with it, a pyrylium salt, a thiapyrylium salt, ammonium dichromate, acetophenone, benzophenone, benzil, phenanthrene, thioxanthone, dichloropropylphenyl ketone, anthraquinone, 2-chloroanthraquinone, 2-bromoanthraquinone, sodium anthraquinone β-sulfonate, 1,5-dinitro anthraquinone, 1,2-benzanthraquinone, phenanthrenequinone, 5-benzoylacetonaphthene, 5-nitroacetoneaphthene, 1,4-naphthoquinone, 1,8-phthaloylnaphthalene, 2-nitrofluorene, p-nitroaniline, picramide;
oxidizing agents, for example potassium dichromate, ammonium dichromate, calcium perchlorate;
polymerizable monomers, for example 2-hydroxyethyl acrylate, 2-hydroxyethyl methacrylate, 2-hydroxypropylacrylate, 2-hydroxypropyl methacrylate, N-vinylpyrrolidone, 2-hydroxyethylacryloylphosphate, acrylamide, methacrylamide, N-methylolacrylamide, N-methylolmethacrylamide, N-methoxymethylacrylamide, N-ethoxy-methylacrylamide, ethylene glycol monoacrylate, dipropylene glycol monoacrylate, N,N-dimethylaminoethylacrylate, styrene, vinyltoluene, monochlorostyrene, diallylphthalate, vinyl acetate, glycidyl methacrylate;
salts of polyvalent metals, for example a chloride, bromide, nitrate, sulfate or acetate of a polyvalent metal such as aluminum, iron, copper, zinc, tin, titanium, nickel, antimony, magnesium, vanadium, chromium or zirconium, in particular copper (II) chloride, aluminum chloride, iron (III) chloride, tin (IV) chloride, zinc chloride, nickel (II) chloride, magnesium chloride, aluminum sulfate, copper (II) acetate, chromium acetate and the like. However, the crosslinkers which can be used according to the invention are not limited to the aforementioned examples.

Suitable crosslinkers are, for example, Polycup 9200 polyamide epichlorohydrin, Encor 3875 (polyacrylic acid with sodium hypophosphite catalyst) and ammonium zirconium carbonate.

Alkali metal hypophosphites and alkali metal phosphite catalysts are particularly suitable.

The catalyst is preferably an alkali/alkaline earth phosphinate; Na phosphinate is particularly preferred as a catalyst.

The presence of the catalyst causes the crosslinking reaction between OH groups of the starch that is present and the carboxylic acid from the polymers that is present to be accelerated and additionally brings about a markedly reduced yellowing for the same thermal load during curing of the binder system.

The thermodimensional stability of the textile fabric can if necessary be improved by using a crosslinker.

### BINDER COMPONENT D) (FILLERS)

The binder system used according to the invention can also contain up to 10% by weight of filler. Suitable fillers are inorganic fillers of natural and/or synthetic origin.

The inorganic fillers are, for example, mineral fillers, preferably loam, clay, calcined loam, calcined clay, lime, chalk, natural and/or synthetic carbonates, natural and/or synthetic oxides, carbides, natural and/or synthetic hydroxides, sulfates and phosphates, based on natural and/or synthetic silicates, silicas, silicon and/or quartz, fluorite or talc. Optionally, the fillers are silanized or rendered additionally hydrophobic.

### BINDER COMPONENT E) (ADDITIVES)

The binder system used according to the invention can also contain up to 10% by weight of additives. These are commercially available additives such as preservatives, stabilizers, anti-oxidants, defoamers, hydrophobing agents, UV stabilizers, plasticizers, adhesion promoters, wetting agents, foaming auxiliaries and/or pigments. These are contained in commercial products to some extent and serve to stabilize storage and transport or can also be added subsequently in order to meet the customer's specifications.

The adhesion promoter promotes adhesion of the binder to the surface of the fibers of the textile fabric. Depending on the type of fiber, various adhesion promoters are used. Insofar as the textile fabric has glass fibers, in particular silanes, especially organo-functionalized silanes, are suitable.

The adhesion promoter is preferably silane A187. Such adhesion promoters are marketed, among others, by the company Momentive under the name Silquest A-187.

### TEXTILE FABRIC

In the context of this description, the term "textile fabric" should be understood in its broadest sense. Thus, this encompasses all structures made from fibers which have been manufactured according to a fabric-forming technique. The fiber-forming materials are natural fibers, mineral fibers, glass fibers, fibers formed from synthetic products and/or fibers formed from synthesized polymers. Woven fabrics, mats, knitted fabrics, crocheted fabrics, non-woven fabrics, particularly preferably non-woven fabrics should be understood to constitute textile fabrics in the context of the present invention.

The textile fabrics based on mineral fibers and/or glass fibers are, in particular, non-woven fabrics based on mineral fibers and/or glass fibers. The aforementioned non-woven fabrics based on mineral fibers and/or glass fibers can also be combined with further textile fabrics, in particular non-woven fabrics.

The glass fiber non-woven fabrics or mineral fiber non-woven fabrics used can be produced by all known methods. In particular, glass fiber non-woven fabrics which are manufactured by means of the wet laying method, the dry laying method or the air laid technique are suitable. In the context of the manufacturing method, in particular in the wet laying method, these non-woven fabrics can also contain small amounts of chemical auxiliaries, e.g., thickeners, defoamers, etc which are dictated by the process. These substances derive from the circulating water during the manufacture of non-woven fabrics.

The mineral fiber non-woven fabrics used according to the invention can be consolidated by the binder system according to the invention and additionally by mechanical measures, e.g., needling or hydrodynamic needling. Particular preference is given to carded non-woven fabrics made of filaments, i.e., continuous fibers or staple fibers. The mean diameter of the mineral fibers is between 8 and 16 µm, preferably between 10 and 12 µm.

Suitable mineral fibers include aluminosilicate, ceramic, dolomite fibers or fibers from vulcanites e.g., basalt, diabase, melaphyre. These are collectively referred to as palaeobasalts, wherein diabase is also often referred to as greenstone.

The basis weight of the mineral fiber non-woven fabric used according to the invention is between 20 and 350 g/m², preferably between 25 and 90 g/m². The above specifications are also valid for the glass non-woven fabrics described below.

The glass fiber non-woven fabrics used according to the invention can be consolidated by binders or even by mechanical measures, e.g., needling or hydrodynamic needling. The glass fibers may be filaments or continuous or cut glass fibers, wherein in the latter case, the length of the fibers is between 1 and 40 mm, preferably 4 to 20 mm. The mean diameter of the glass fibers is between 6 and 20 µm, preferably between 8 and 15 µm.

Suitable glass fibers include glass types such as E-glass, S-glass, R-glass or C-glass; for economic reasons, E-glass or C-glass is preferred.

Within the textile fabrics based on synthetic polymer, non-woven fabrics made from fibers formed from synthetic polymers, in particular spunbonded fabric, so-called spunbonds, which are produced by a random deposition of freshly melt-spun filaments, are preferred. They consist of continuous synthetic fibers made from melt-spinnable polymer materials. Examples of suitable polymer materials are polyamides such as polyhexamethylene diadipamide, polycaprolactam, aromatic or semi-aromatic polyamides ("aramids"), aliphatic polyamides such as nylon, semi-aromatic or fully aromatic polyesters, polyphenylene sulfide (PPS), polymers containing ether and keto groups such as, for example, polyether ketones (PEK) and polyether ether ketone (PEEK), polyolefins such as polyethylene or polypropylene, or polybenzimidazoles.

Preferably, the spun non-woven fabrics are made from melt-spinnable polyesters. Suitable polyester materials are, in principle, all known types suitable for fiber manufacture. Such polyesters consist predominantly of building blocks which are derived from aromatic dicarboxylic acids and aliphatic diols. Common aromatic dicarboxylic acid building blocks are the divalent residues of benzenedicarboxylic acids, in particular terephthalic acid and isophthalic acid; common diols contain 2 to 4 carbon atoms, wherein ethylene glycol is particularly suitable. Particularly advantageous are spun non-woven fabrics which consist of at least 85 mol% of polyethylene terephthalate. The remaining 15 mol% is then built up from dicarboxylic acid units and glycol units, which act as so-called modifiers and which allow the person skilled in the art to specifically modify the physical and chemical properties of the filaments produced. Examples of such dicarboxylic acid units are residues of isophthalic acid or of aliphatic dicarboxylic acid, such as, for example, glutaric acid, adipic acid, sebacic acid; examples of modifying diol residues are those of longer-chain diols, e.g., of propanediol or butanediol, of di- or triethylene glycol or, if present in small amounts, of polyglycol with a molecular weight of about 500 to 2000.

Particular preference is given to polyesters which contain at least 95 mol% of polyethylene terephthalate (PET), in particular those of unmodified PET.

The individual titers of the polyester filaments in the spun non-woven fabric are between 1 and 16 dtex, preferably 2 to 8 dtex.

The basis weight of the fabric used according to the invention made from fibers of synthetic products, in particular of synthetic polymers, is between 20 and 500 g/m², preferably between 40 and 250 g/m². The above specifications also apply to spun non-woven fabrics, in particular to spun non-woven fabrics based on melt-spinnable synthetic polymers, wherein polyester is particularly preferred.

In addition to the aforementioned spun non-woven fabrics, so-called staple fiber sheets are also possible based on the synthetic polymer mentioned above. The individual titers of the staple fibers in the staple fiber sheet are usually between 1 and 16 dtex, preferably 2 to 8 dtex. The staple fibers usually have a fiber length of 20-100 mm. The basis weight of the staple fiber sheets is between 20 and 500 g/m², preferably between 40 and 250 g/m².

In a further embodiment of the invention, especially when used as reinforcing inserts for roofing sheets, the textile fabrics have at least one reinforcement. This is preferably designed in such a way that the reinforcement absorbs a force so that in the force-expansion diagram (at 20°C) the reference force of the reinforcing insert with reinforcement compared with the reinforcing insert without reinforcement in the range between 0 and 1% elongation differs by at least 10% at at least one point.

In a further embodiment, the reinforcement can also be installed such that force is absorbed by the reinforcement only at higher extensions.

For economic reasons, preferred reinforcements consist of glass multifilaments in the form of - essentially - parallel yarn sheets or layers. Usually, only one reinforcement is made in the longitudinal direction of the non-woven fabrics by means of - essentially - parallel yarn sheets.

The reinforcing threads can be used as such or in the form of their own textile fabric, for example as a woven fabric, mat, knitted fabric, crocheted fabric or as a non-woven fabric. Preference is given to reinforcements having mutually parallel reinforcing yarns, i.e., warp thread sheets, as well as mats or woven fabrics.

The reference force is measured according to EN 29073, part 3, on 5 cm wide specimens with a clamping length of 200 mm. The numerical value of the preload force, expressed in centinewton, corresponds to the numerical value of the basis weight of the sample, expressed in grams per square meter.

The reinforcement can be effected by incorporating the reinforcements in the textile fabric, on at least one side of the textile fabric, or else at any point of the reinforcing insert, in particular in further textile fabrics which are different from the first textile fabric or as an independent textile fabric.

For use as a reinforcing insert, the consolidated textile fabric according to the invention can have further textile fabrics, in addition to the already described textile fabric according to the invention. These further textile fabrics are preferably different from the first-named textile fabric, i.e., consist of a different material.

Insofar as the textile fabric is constructed from synthetic polymer, it may be necessary to incorporate further textile fabrics into the reinforcing insert according to the invention in order to optimize the application-related properties.

The textile fabrics formed from synthetic polymer used according to the invention are technical products and therefore have a corresponding reference force (according to EN 29073, part 3, on 5 cm wide specimens with a 200 mm clamping length). The numerical value of the preload force, expressed in centinewton, corresponds to the numerical value of the basis weight of the sample, expressed in grams per square meter. Due to its technical character, the reference force is ≥ 10N/5cm for weights of 20g/m² and ≥ 600N/5cm for weights of 250g/m² . Accordingly, the specific reference force M (N/5cm/basis weight in g/m² ) is preferably between 0.1 and 1.0 Nm²/gcm, in particular between 0.2 and 0.8 Nm²/gcm.

As already described, the textile fabric consolidated by means of the binder according to the invention has a significantly higher proportion of natural starch, i.e., unmodified renewable raw materials, compared with consolidated textile fabrics based on modified starches, without adversely affecting the mechanical properties of the consolidated textile fabric. The textile fabrics consolidated by means of the binder according to the invention have good wet strength and excellent mechanical strength, but are cheaper to produce. The same applies to dimensional stability upon heating, which is also maintained despite the exchange of significant proportions of component a) by components b). Despite the high proportion of component b), the brittleness of textile fabrics consolidated by means of the binder system according to the invention is quite low.

The binder according to the invention is, furthermore, slightly hygroscopic, so that no restrictions can be envisaged in using the consolidated textile fabrics as reinforcing inserts in the manufacture of PVC flooring, for example by blistering.

The aging behavior of the consolidated textile fabrics, which is almost constant, is also surprising.

In addition, it has been found that the binder according to the invention allows for very good miscibility. The combination according to the invention of polyvinyl alcohol polymers and starch, but in particular of natural starch(es) or mixtures of starches which predominantly, i.e., a minimum of 50% by weight, consist of of natural starch(es), results in binder systems which have a high homogeneity. This high homogeneity results in a good distribution of the binder and in the textile fabric during the application of the binder, which in turn leads to very homogeneous properties of the consolidated textile fabric.

Compared with a textile fabric which exclusively has starch as a binder component, the textile fabric consolidated according to the invention is improved or at least equivalent in terms of its hygroscopic behavior, strength, in particular wet and hot strength, brittleness, aging behavior and flexibility.

Considerable cost savings are made because of the predominant use of starch, in particular of natural starch. In addition, a completely formaldehyde-free binder system is obtained which, surprisingly, does not cause a deterioration in the product properties, in particular with respect to the mechanical properties of the textile fabric such as, for example, strength.

For the person skilled in the art, it was surprising that the binder system according to the invention can be applied to the textile fabric in a sufficiently high solids concentration. Hitherto, a person skilled in the art would have known that binder systems which comprise natural, i.e., native starch, do not reach the required binder content of ≥ 15% by weight [binder content after drying, based on the total weight of the raw textile fabric], in a single application.

Accordingly, the binder system according to the invention preferably has a solids concentration of a minimum of 5% by weight, wherein the specifications regarding the proportions by weight are based on the dry mass of the binder system, i.e., without water, and the sum of constituents a) to e) is 100% by weight. The solids concentration of the components a) and b) of the binder system is preferably between 5% by weight and 30% by weight, particularly preferably between 7% by weight and 15% by weight.

The textile fabric consolidated according to the invention can itself be used as a reinforcing insert or in combination with further textile fabrics as a reinforcing insert for coated sarking membrane, roofing and waterproofing sheets, and as a textile backing or textile reinforcement in flooring, in particular fitted carpets and PVC flooring, or in facers, wall coatings for the interior and exterior of buildings, furniture, since these do not suffer from yellowing compared with previous known products, in particular in the case of thermal curing of the binder system, and thus are particularly suitable as a decorative surface. In addition, the textile fabrics consolidated according to the invention can also be used for flooring applications and in the field of filtration.

### COATING MATERIALS

Polyethylene or polyvinyl chloride, polyurethanes, EPDM or TPO (polyolefins) are used as coating materials for flooring or carpet backings. In addition, bitumen is used for the coated sarking membranes, roofing and waterproofing sheets.

The bituminized sheets contain at least one carrier membrane - as described above - embedded in a bitumen matrix, wherein the proportion by weight of the bitumen on the basis weight of the bituminized roofing membrane is preferably 60 to 97% by weight and that of the spun non-woven fabric is 3 to 40% by weight.

### MANUFACTURE

The textile fabrics used according to the invention are manufactured by means of known methods and procedures. The consolidated textile fabric according to the invention is manufactured as definated in claim 12 to 15.

The applied quantities and other characteristics of the binder system have already been described in detail in the introduction and are also valid for the method.

The textile fabric is formed using known means.

The mechanical consolidating which may be carried out is also carried out using known methods.

The reinforcement, if any, is incorporated during or after the formation of the textile fabric or before or during coating with the binder system according to the invention. The supply of the reinforcement and any further optional heat treatment in the manufacturing process is preferably carried out under tension, in particular under longitudinal tension.

Any further textile fabrics to be incorporated are supplied before or during consolidation of the binder according to the invention.

The application of the binder system in step B) is likewise carried out by means of known methods. The applied binder (after drying) is preferably between 5 and 50% by weight of dry binder, in particular 10 and 40% by weight, particularly preferably 15 and 30% by weight of dry binder, based on the total weight of the raw textile fabric.

Because of the nature of the binder according to the invention, it is possible for the required amount of binder to be applied in one application step.

Drying or consolidating and curing of the binder is likewise accomplished by means of methods known to the person skilled in the art, wherein temperatures of at least 140°C to 250°C have been shown to be advantageous.

The individual method steps are known per se, but they are patentable in the combination or sequence of the invention and the use of the binder system according to the invention.

### Measurement methods:

### General measurement methods:

### Basis weight:

The basis weight is determined according to DIN EN ISO 29073-1.

### Fiber diameter measurement:

The fiber diameter is determined according to DIN EN ISO 1973 (1995 version).

### Reference force measurement:

The reference force is measured according to EN 29073, part 3, on 5 cm wide specimens with a clamping length of 200 mm. The numerical value of the preload force, expressed in centinewton, corresponds to the numerical value of the basis weight of the sample, expressed in grams per square meter.

## Claims

1. A textile fabric consolidated with a binder comprising:
a) 1 to ≤ 30% by weight of polyvinyl alcohol polymers, and
b) ≥ 70% by weight of starch having a minimum of 50% by weight of natural starch(es), preferably a natural starch or a mixture of a natural starch with other natural starches or preferably a natural starch or a mixture of one or more natural starches with other starches,
c) 0 to 10% by weight of crosslinker,
d) 0 to 10% by weight of fillers,
e) 0 to 10% by weight of additives,
wherein the specifications regarding the proportions by weight are based on the dry mass of the binder, i.e., without water, and the sum of the components a) to e) is 100% by weight.

2. The textile fabric according to claim 1, **characterized in that** the proportion of the component a) (polyvinyl alcohol polymer) is ≤ 20% by weight.

3. The textile fabric according to claim 1 or 2, **characterized in that** the proportion of the component b) (starch) is ≥ 80% by weight, in particular 99 to 80% by weight.

4. The textile fabric as claimed in one or more of claims 1 to 3, **characterized in that** the sum of the components a) and b) is at least 80% by weight, in particular at least 85% by weight, particularly preferably at least 90% by weight.

5. The textile fabric according to one or more of claims 1 to 4, **characterized in that** the quantity of the binder applied to the textile fabric, determined after drying, is between 5 and 50% by weight of dry binder, preferably 10 and 30% by weight, in particular 10 and 25% by weight.

6. The textile fabric according to one or more of claims 1 to 5, **characterized in that** the starch used and the entire binder exclusively comprises natural starches.

7. The textile fabric according to one or more of claims 1 to 6, **characterized in that** the textile fabrics comprise natural fibers, mineral fibers, glass fibers, fibers formed from synthetic products and/or fibers formed from synthesized polymers, wherein mineral fibers and/or glass fibers and fibers formed from synthetic polymers, in particular melt-spinnable polymers, are preferred.

8. The textile fabric according to one or more of claims 1 to 7, **characterized in that** the textile fabric is a woven fabric, mat, knitted fabric, crocheted fabric, non-woven fabric, preferably a spun non-woven fabric.

9. The textile fabric according to one or more of claims 1 to 8, **characterized in that** the textile fabric is a mineral fiber non-woven fabric or a glass fiber non-woven fabric with a basis weight between 20 and 350 g/m², preferably between 25 and 90 g/m².

10. The textile fabric according to one or more of claims 1 to 8, **characterized in that** the textile fabric is a non-woven fabric formed from synthetic polymers with a basis weight between 20 and 500 g/m², preferably between 40 and 250 g/m², wherein a spun non-woven fabric is preferred.

11. The textile fabric according to one or more of claims 1 to 8 or 10, **characterized in that** the textile fabric is a non-woven fabric formed from synthetic polymers with a specific reference force M (N/5cm/basis weight in g/m²) of between 0.1 and 1.0 Nm²/gcm, preferably between 0.2 and 0.8 Nm²/gcm, wherein a spun non-woven fabric is preferred.

12. A method for the manufacture of a textile fabric which is consolidated with a binder, comprising the steps of:
A) forming a textile fabric and, if appropriate, mechanically consolidating the same or supplying a textile fabric,
B) applying a binder comprising:
a) 1 to ≤ 30% by weight, preferably ≤ 20% by weight, of polyvinyl alcohol polymers, and
b) ≥ 70% by weight of starch having a minimum of 50% by weight of natural starch(es), preferably ≥ 80% by weight, in particular 99 to 80% by weight of starch, preferably a natural starch or a mixture of a natural starch with other natural starches or preferably a natural starch or a mixture of one or more natural starches with other starches, , and
c) 0 to 10% by weight of crosslinker,
d) 0 to 10% by weight of fillers,
e) 0 to 10% by weight of additives,
wherein the specifications of the proportions by weight are based on the dry mass of the binder, i.e., without water, and the sum of the components a) to e) is 100% by weight, by means of known methods, optionally removing excess binder,
C) drying and curing the binder.

13. The method according to claim 12, **characterized in that** the binder is defined in claims 2 to 6.

14. The method according to claim 12 or 13, **characterized in that** the textile fabric is defined in claims 7 to 11.

15. The method according to one or more of claims 12 to 14, **characterized in that** the binder is applied in one application step.

16. A binder for consolidating textile fabrics comprising:
a) 1 to ≤ 30% by weight, preferably ≤ 20% by weight of polyvinyl alcohol polymers, and
b) ≥ 70% by weight of starch having a minimum of 50% by weight of natural starch(es), preferably ≥ 80% by weight, in particular 99 to 80% by weight of starch, preferably a natural starch or a mixture of a natural starch with other natural starches or preferably a natural starch or a mixture of one or more natural starches with other starches, , and
c) 0 to 10% by weight of crosslinker,
d) 0 to 10% by weight of fillers,
e) 0 to 10% by weight of additives,
wherein the specifications regarding the proportions by weight are based on the dry mass of the binder, i.e., without water, and the sum of the constituents a) to e) is 100% by weight.

17. The binder according to claim 16, **characterized in that** the binder is defined in claims 2 to 6.

18. Use of the binder according to claim 16 or 17, for consolidating textile fabrics.

19. Use of the textile fabric according to one or more of claims 1 to 11 as (i) a reinforcing insert, optionally in combination with further textile fabrics, for coated sarking membranes, roofing and waterproofing sheets, (ii) as well as a textile backing or textile reinforcement in flooring, in particular fitted carpets and PVC flooring, (iii) as a facer in wall coatings for the interior and exterior of buildings, (vi) in decorative surfaces, or in the field of filtration.

## Patentansprüche

1. Mit einem Bindemittel verfestigtes textiles Fläschengebilde, umfassend:
a) 1 bis ≤ 30 Gew.-% Polyvinylalkoholpolymere und
b) ≥ 70 Gew.-% Stärke mit mindestens 50 Gew.-% einer oder mehrerer natürlicher Stärken, bevorzugt einer natürlichen Stärke oder einer Mischung einer natürlichen Stärke mit anderen natürlichen Stärken oder bevorzugt einer natürlichen Stärke oder einer Mischung einer oder mehrerer natürlicher Stärken mit anderen Stärken,
c) 0 bis 10 Gew.-% Vernetzungsmittel,
d) 0 bis 10 Gew.-% Füllstoffe,
e) 0 bis 10 Gew.-% Additive,
wobei sich die Angaben zu den Gewichtsanteilen auf die Trockenmasse des Bindemittels, das heißt ohne Wasser, beziehen und die Summe der Komponenten a) bis e) 100 Gew.-% ergibt.

2. Textiles Fläschengebilde nach Anspruch 1, **dadurch gekennzeichnet, dass** der Anteil der Komponente a) (Polyvinylalkoholpolymer) ≤ 20 Gew.-% beträgt.

3. Textiles Fläschengebilde nach Anspruch 1 oder 2, **dadurch gekennzeichnet, dass** der Anteil der Komponente b) (Stärke) ≥ 80 %, insbesondere 99 bis 80 Gew.-%, beträgt.

4. Textiles Fläschengebilde nach einem oder mehreren der Ansprüche 1 bis 3, **dadurch gekennzeichnet, dass** die Summe der Komponenten a) und b) mindestens 80 Gew.-%, insbesondere mindestens 85 Gew.-%, besonders bevorzugt mindestens 90 Gew.-% beträgt.

5. Textiles Fläschengebilde nach einem oder mehreren der Ansprüche 1 bis 4, **dadurch gekennzeichnet, dass** die auf das textile Fläschengebilde aufgebrachte Bindemittelmenge, ermittelt nach dem Trocknen, zwischen 5 und 50 Gew.-% trockenes Bindemittel, bevorzugt 10 und 30 Gew.-%, insbesondere 10 und 25 Gew.-%, beträgt.

6. Textiles Fläschengebilde nach einem oder mehreren der Ansprüche 1 bis 5, **dadurch gekennzeichnet, dass** die verwendete Stärke sowie das gesamte Bindemittel ausschließlich natürliche Stärken umfassen.

7. Textiles Fläschengebilde nach einem oder mehreren der Ansprüche 1 bis 6, **dadurch gekennzeichnet, dass** die textilen Fläschengebilde Naturfasern, Mineralfasern, Glasfasern, aus synthetischen Produkten gebildete Fasern und/oder aus synthetisierten Polymeren gebildete Fasern umfassen, wobei Mineralfasern und/oder Glasfasern sowie aus synthetischen Polymeren gebildete Fasern, insbesondere schmelzspinnbare Polymere, bevorzugt sind.

8. Textiles Fläschengebilde nach einem oder mehreren der Ansprüche 1 bis 7, **dadurch gekennzeichnet, dass** es sich bei dem textilen Fläschengebilde um ein Gewebe, eine Matte, ein Gewirk, ein Häkelgewebe, ein Vlies, bevorzugt um ein Spinnvlies, handelt.

9. Textiles Fläschengebilde nach einem oder mehreren der Ansprüche 1 bis 8, **dadurch gekennzeichnet, dass** es sich bei dem textilen Fläschengebilde um ein Mineralfaservlies oder ein Glasfaservlies mit einem Flächengewicht zwischen 20 und 350 g/m², bevorzugt zwischen 25 und 90 g/m², handelt.

10. Textiles Fläschengebilde nach einem oder mehreren der Ansprüche 1 bis 8, **dadurch gekennzeichnet, dass** es sich bei dem textilen Fläschengebilde um ein aus synthetischen Polymeren gebildetes Vlies mit einem Flächengewicht zwischen 20 und 500 g/m², bevorzugt zwischen 40 und 250 g/m², handelt, wobei ein Spinnvlies bevorzugt ist.

11. Textiles Fläschengebilde nach einem oder mehreren der Ansprüche 1 bis 8 oder 10, **dadurch gekennzeichnet, dass** es sich bei dem textilen Fläschengebilde um ein aus synthetischen Polymeren gebildetes Vlies mit einer spezifischen Bezugskraft M (N/5cm/Flächengewicht in g/m²) zwischen 0,1 und 1,0 Nm²/gcm, bevorzugt zwischen 0,2 und 0,8 Nm²/gcm, handelt, wobei ein Spinnvlies bevorzugt ist.

12. Verfahren für die Herstellung eines mit einem Bindemittel verfestigten textilen Fläschengebildes, umfassend die Schritte:
A) Bilden eines textilen Fläschengebildes und ggf. mechanisches Verfestigen desselben bzw. Bereitstellen eines textilen Fläschengebildes,
B) Aufbringen eines Bindemittels umfassend:
a) 1 bis ≤ 30 Gew.-%, bevorzugt ≤ 20 Gew.-%, Polyvinylalkoholpolymere und
b) ≥ 70 Gew.-% Stärke mit mindestens 50 Gew.-% einer oder mehrerer natürlicher Stärken, bevorzugt ≥ 80 Gew.-%, insbesondere 99 bis 80 Gew.-% Stärke, bevorzugt einer natürlichen Stärke oder einer Mischung einer natürlichen Stärke mit anderen natürlichen Stärken oder bevorzugt einer natürlichen Stärke oder einer Mischung einer oder mehrerer natürlicher Stärken mit anderen Stärken, und
c) 0 bis 10 Gew.-% Vernetzungsmittel,
d) 0 bis 10 Gew.-% Füllstoffe,
e) 0 bis 10 Gew.-% Additive,
wobei sich die Angaben zu den Gewichtsanteilen auf die Trockenmasse des Bindemittels, das heißt ohne Wasser, beziehen und die Summe der Komponenten a) bis e) 100 Gew.-% mittels bekannten Verfahren ergibt, wobei Bindemittelüberschuss wahlweise entfernt wird,
C) Trocknen und Härten des Bindemittels.

13. Verfahren nach Anspruch 12, **dadurch gekennzeichnet, dass** das Bindemittel in den Ansprüchen 2 bis 6 definiert ist.

14. Verfahren nach Anspruch 12 oder 13, **dadurch gekennzeichnet, dass** das textile Fläschengebilde in den Ansprüchen 7 bis 11 definiert ist.

15. Verfahren nach einem oder mehreren der Ansprüche 12 bis 14, **dadurch gekennzeichnet, dass** das Bindemittel in einem Aufbringungsschritt aufgebracht wird.

16. Bindemittel zum Verfestigen von textilen Fläschengebilden, umfassend:
a) 1 bis ≤ 30 Gew.-%, bevorzugt ≤ 20 Gew.-%, Polyvinylalkoholpolymere und
b) ≥ 70 Gew.-% Stärke mit mindestens 50 Gew.-% einer oder mehrerer natürlicher Stärken, bevorzugt ≥ 80 Gew.-%, insbesondere 99 bis 80 Gew.-% Stärke, bevorzugt einer natürlichen Stärke oder einer Mischung einer natürlichen Stärke mit anderen natürlichen Stärken oder bevorzugt einer natürlichen Stärke oder einer Mischung einer oder mehrerer natürlicher Stärken mit anderen Stärken, und
c) 0 bis 10 Gew.-% Vernetzungsmittel,
d) 0 bis 10 Gew.-% Füllstoffe,
e) 0 bis 10 Gew.-% Additive,
wobei sich die Angaben zu den Gewichtsanteilen auf die Trockenmasse des Bindemittels, das heißt ohne Wasser, beziehen und die Summe der Bestandteile a) bis e) 100 Gew.-% ergibt.

17. Bindemittel nach Anspruch 16, **dadurch gekennzeichnet, dass** das Bindemittel in den Ansprüchen 2 bis 6 definiert ist.

18. Verwendung des Bindemittels nach Anspruch 16 oder 17 zum Verfestigen von textilen Fläschengebilden.

19. Verwendung des textilen Fläschengebildes nach einem oder mehreren der Ansprüche 1 bis 11 als (i) Verstärkungseinsatz, wahlweise in Kombination mit weiteren textilen Fläschengebilden, für beschichtete Unterspann-, Dach- und Dichtungsbahnen, (ii) sowie als textiler Träger bzw. textile Verstärkung in Bodenbelägen, insbesondere Teppichböden und PVC-Belägen, (iii) als Sichtschicht in Wandbeschichtungen im Innen- und Außenbereich von Gebäuden, (vi) in dekorativen Oberflächen oder im Bereich der Filtration.

## Revendications

1. Tissu textile consolidé avec un liant comprenant :
a) 1 à ≤ 30 % en poids de polymères d'alcool polyvinylique, et
b) ≥ 70 % en poids d'amidon ayant un minimum de 50 % en poids d'amidon(s) naturel(s), de préférence un amidon naturel ou un mélange d'un amidon naturel avec d'autres amidons naturels ou de préférence un amidon naturel ou un mélange d'un ou plusieurs amidons naturels avec d'autres amidons,
c) 0 à 10 % en poids d'agent de réticulation,
d) 0 à 10 % en poids de remplisseurs,
e) 0 à 10 % en poids d'additifs,
dans lequel les spécifications concernant les proportions en poids sont basées sur la masse sèche du liant, c'est-à-dire sans eau, et la somme des composants a) à e) est de 100 % en poids.

2. Tissu textile selon la revendication 1, **caractérisé en ce que** la proportion du composant a) (polymère d'alcool polyvinylique) est ≤ 20 % en poids.

3. Tissu textile selon la revendication 1 ou 2, **caractérisé en ce que** la proportion du composant b) (amidon) est ≥ 80 % en poids, en particulier de 99 à 80 % en poids.

4. Tissu textile selon une ou plusieurs des revendications 1 à 3, **caractérisé en ce que** la somme des composants a) et b) est d'au moins 80 % en poids, en particulier d'au moins 85 % en poids, de manière particulièrement préférée d'au moins 90 % en poids.

5. Tissu textile selon une ou plusieurs des revendications 1 à 4, **caractérisé en ce que** la quantité de liant appliquée sur le tissu textile, déterminée après séchage, est comprise entre 5 et 50 % en poids de liant sec, de préférence entre 10 et 30 % en poids, en particulier entre 10 et 25 % en poids.

6. Tissu textile selon une ou plusieurs des revendications 1 à 5, **caractérisé en ce que** l'amidon utilisé et l'ensemble du liant comprennent exclusivement des amidons naturels.

7. Tissu textile selon une ou plusieurs des revendications 1 à 6, **caractérisé en ce que** les tissus textiles comprennent des fibres naturelles, des fibres minérales, des fibres de verre, des fibres formées de produits synthétiques et/ou des fibres formées de polymères synthétisés, dans lequel les fibres minérales et/ou les fibres de verre et les fibres formées de polymères synthétiques, en particulier des polymères filables à l'état fondu, étant préférées.

8. Tissu textile selon une ou plusieurs des revendications 1 à 7, **caractérisé en ce que** le tissu textile est un tissu tissé, un mat, un tissu tricoté, un tissu crocheté, un tissu non tissé, de préférence un tissu non tissé filé.

9. Tissu textile selon une ou plusieurs des revendications 1 à 8, **caractérisé en ce que** le tissu textile est un tissu non tissé en fibres minérales ou un tissu non tissé en fibres de verre ayant un poids de base compris entre 20 et 350 g/m², de préférence entre 25 et 90 g/m².

10. Tissu textile selon une ou plusieurs des revendications 1 à 8, **caractérisé en ce que** le tissu textile est un tissu non tissé formé de polymères synthétiques ayant un poids de base compris entre 20 et 500 g/m², de préférence entre 40 et 250 g/m², dans lequel un tissu non tissé filé étant préféré.

11. Tissu textile selon une ou plusieurs des revendications 1 à 8 ou 10, **caractérisé en ce que** le tissu textile est un tissu non tissé formé de polymères synthétiques avec une force de référence spécifique M (N/5cm/poids de base en g/m²) comprise entre 0,1 et 1,0 Nm²/gcm, de préférence entre 0,2 et 0,8 Nm²/gcm, dans lequel un tissu non tissé filé étant préféré.

12. Procédé de fabrication d'un tissu textile consolidé par un liant, comprenant les étapes consistant à :
A) former un tissu textile et, le cas échéant, le consolider mécaniquement ou fournir un tissu textile,
B) appliquer un liant comprenant :
a) 1 à ≤ 30 % en poids, de préférence ≤ 20 % en poids, de polymères d'alcool polyvinylique, et
b) ≥ 70 % en poids d'amidon ayant au minimum 50 % en poids d'amidon(s) naturel(s), de préférence ≥ 80 % en poids, en particulier 99 à 80 % en poids d'amidon, de préférence un amidon naturel ou un mélange d'un amidon naturel avec d'autres amidons naturels ou de préférence un amidon naturel ou un mélange d'un ou plusieurs amidons naturels avec d'autres amidons, et
c) 0 à 10 % en poids d'agent de réticulation,
d) 0 à 10 % en poids de remplisseurs,
e) 0 à 10 % en poids d'additifs,
dans lequel les spécifications des proportions en poids sont basées sur la masse sèche du liant, c'est-à-dire sans eau, et la somme des composants a) à e) est de 100 % en poids, au moyen des procédés connus, en éliminant éventuellement l'excès de liant,
C) sécher et durcir le liant.

13. Procédé selon la revendication 12, **caractérisé en ce que** le liant est défini dans les revendications 2 à 6.

14. Procédé selon la revendication 12 ou 13, **caractérisé en ce que** le tissu textile est défini dans les revendications 7 à 11.

15. Procédé selon une ou plusieurs des revendications 12 à 14, **caractérisé en ce que** le liant est appliqué en une seule étape d'application.

16. Liant pour la consolidation de tissus textiles comprenant :
a) 1 à ≤ 30 % en poids, de préférence ≤ 20 % en poids de polymères d'alcool polyvinylique, et
b) ≥ 70 % en poids d'amidon ayant un minimum de 50 % en poids d'amidon(s) naturel(s), de préférence ≥ 80 % en poids, en particulier 99 à 80 % en poids d'amidon, de préférence un amidon naturel ou un mélange d'un amidon naturel avec d'autres amidons naturels ou de préférence un amidon naturel ou un mélange d'un ou plusieurs amidons naturels avec d'autres amidons, et
c) 0 à 10 % en poids d'agent de réticulation,
d) 0 à 10 % en poids de remplisseirs,
e) 0 à 10 % en poids d'additifs,
dans lequel, les spécifications concernant les proportions en poids étant basées sur la masse sèche du liant, c'est-à-dire sans eau, et la somme des constituants a) à e) représente 100 % en poids.

17. Liant selon la revendication 16, **caractérisé en ce que** le liant est défini dans les revendications 2 à 6.

18. Utilisation du liant selon la revendication 16 ou 17 pour consolider des tissus textiles.

19. Utilisation du tissu textile selon une ou plusieurs des revendications 1 à 11 comme (i) insert de renfort, éventuellement en combinaison avec d'autres tissus textiles, pour des membranes de sous-toiture revêtues, des membranes de toiture et d'étanchéité, (ii) ainsi que comme support textile ou renfort textile dans des revêtements de sol, en particulier des moquettes et des revêtements de sol en PVC, (iii) comme face dans des revêtements muraux pour l'intérieur et l'extérieur de bâtiments, (vi) dans des surfaces décoratives ou dans le domaine de la filtration.
